# EUROPÄISCHE PATENTSCHRIFT

(11) **EP 1 664 148 B1**
(45) Veröffentlichungstag und Bekanntmachung des Hinweises auf die Patenterteilung: **07.03.2012**
(21) Anmeldenummer: 04765314.2
(22) Anmeldetag: 16.09.2004
(51) Int. Cl.: C08J 5/00, B29C 37/00, C08G 18/32, C08G 18/66, C09D 175/12

(54) **ZWEIKOMPONENTEN-ZUSAMMENSETZUNG ZUR HERSTELLUNG VON POLYURETHAN-GELCOATS FÜR EPOXIDHARZ- UND VINYLESTERHARZ-VERBUNDWERKSTOFFE**
TWO-COMPONENT COMPOSITION FOR PRODUCING POLYURETHANE GEL COATS FOR EPOXY-RESIN AND VINYL-ESTER RESIN COMPOSITE MATERIALS
COMPOSITION A DEUX COMPOSANTS SERVANT A PRODUIRE DES ENDUITS GELIFIES EN POLYURETHANNE POUR DES MATERIAUX COMPOSITES CONSTITUES DE RESINE EPOXY ET DE RESINE VINYLESTER

(30) Priorität: 23.09.2003 DE 10344380
(43) Veröffentlichungstag der Anmeldung: 07.06.2006
(73) Patentinhaber: Mankiewicz Gebr. & Co. (GmbH & Co. KG), D-21107 Hamburg (DE)
(72) Erfinder: WEHNER, Jochen, 21075 Hamburg (DE)
(74) Vertreter: UEXKÜLL & STOLBERG
(86) Internationale Anmeldenummer: PCT/EP2004/010415
(87) Internationale Veröffentlichungsnummer: WO 2005/030825

(56) Entgegenhaltungen:
- DE-A- 19 732 313
- US-A- 4 267 299
- US-A- 5 387 750

## Beschreibung

Die Erfindung betrifft die Verwendung einer Zweikomponenten-Zusammensetzung, die eine Polyolkomponente und eine Polyisocyanatkomponente umfasst, zur Herstellung von Polyurethan-Gelcoats für Epoxidharz- und Vinylesterharz-Verbundwerkstoffe. Die Erfindung betrifft außerdem ein Herstellungsverfahren für den Verbundwerkstoff und den Verbundwerkstoff.

Die Oberflächen von Verbundwerkstoffen (beispielsweise Verbundwerkstoffen aus Glasfasergewebe bzw. -vlies und Epoxidharz/Vinylesterharz) sind oft wenig ansehnlich und außerdem nicht licht- und witterungsbeständig. Sie müssen deshalb mit einer Oberflächenbeschichtung versehen werden. Von der Oberflächenbeschichtung von Epoxidharz/Vinylesterharz-Verbundwerkstoffen muss geschliffen und gespachtelt werden, da es bei der direkten Oberflächenbeschichtung des Verbundwerkstoffs zur Aufrichtung von Fasern kommt. Eine Alternative dazu ist der Einsatz eines Gelcoats.

Die US 4,267,299 A1 betrifft lösungsmittelfreie, sprühbare Zusammensetzungen zur Herstellung von polyurethan- und Poly(harnstoff)urethan-Beschichtungen aus isocyanat-terminiertem Präpolymer oder Quasi-Präpolymer, die Produkte dieser Zusammensetzungen und ein Verfahren zur Herstellung solcher Produkte.

Ein Gelcoat ist ein Harzsystem, das auf Formteile in Verbundbauweise zur Herstellung glatter Bauteiloberflächen aufgebracht werden kann und gleichzeitig auch eine ansehnliche Oberfläche ergibt. Beim In-Mold-Verfahren wird das Gelcoat-Harzsystem nach dem Vermischen seiner Reaktionskomponenten innerhalb der Verarbeitungszeit (Topfzeit) als erste Schicht in eine Form eingetragen. Die nach dem Gelieren erhaltene Schicht ist ausreichend mechanisch stabil, um bei Auftragen des Kunstharzes (beispielsweise eines Epoxidharzes) und gegebenenfalls eines anorganischen oder organischen Vlieses oder Gewebes (beispielsweise eines Glasfasergewebes oder Glasfaservlieses) nicht beschädigt zu werden. Entsprechendes gilt bei Injektionsverfahren und beim Aufbringen von Nasslaminaten sowie beim Aufbringen von Prepregs.

Um eine ausreichende Haftung zwischen (i) Epoxidharz und/oder Vinylesterharz (Kunstharz) und (ii) Gelcoat zu gewährleisten, muss die Beschichtung mit Kunstharz innerhalb der Laminierzeit des Gelcoats erfolgen. Anschließend werden Kunstharz und Gelcoat vollständig ausgehärtet.

Bei der Beschreibung der Erfindung gelten die folgenden Begriffsbestimmungen:
- Die Laminierzeit ist der Zeitraum beginnend mit dem Zeitpunkt der Klebfreiheit des in die Form applizierten Gelcoat-Films, in dem der Gelcoat-Film überlaminiert werden muss, um noch eine Haftung zwischen Gelcoat und Laminat sicherzustellen.
- Die Topfzeit ist der Zeitraum beginnend mit der Vermischung der beiden Reaktionskomponeizten bis zum Gelieren der Reaktionsmischung. Nach Beendigung der Topfzeit ist die Reaktionsmischung nicht mehr verarbeitbar.
- Die Klebfreizeit ist der Zeitraum beginnend mit dem Auftragen der homogenen, angemischten Reaktionsmischting auf die Formoberfläche bis zum Erreichen der. Klebfreiheit des applizierten Films.
- Unter Gelzeit wird die in E-DIN VDE 0291-2 (VDE 0291-Teil 2): 1997-06 unter Punkt 9.2.1 beschriebene, bis zum Gelieren der Reaktionsmischung gemessene Zeit verstanden.

Als Gelcoatharzsysteme werden beispielsweise Formulierungen auf Basis von radikalisch härtenden Harzen wie z.B. ungesättigten Polyestern (UP), Vinylestern (VE) oder Acrylat-terminierten Oligomeren eingesetzt. Diese Harzsysteme sind bei der Anwendung in Verbindung mit UP-Kunstharzen (UP-Verbundwerkstoffen) verarbeitungssicher und zeigen gute Haftung zu einer Vielzahl von Kunstharzen (Verbundwerkstoffhaftung), da aufgrund der durch Luftsauerstoff inhibierten Härtungsreaktionen an der innen liegenden Gelcoat-Oberfläche ein Aushärten der Grenzfläche erst nach dem Auftragen des Kunstharzes erfolgt. Viele kommerzielle Gelcoats auf UP-Basis zeigen aber keine ausreichende Glanzbeständigkeit und neigen zu Abkreiden und Haarrissbildung. Weitere Nachteile von Gelcoats auf Basis von UP sind die unvermeidbaren Monomeremissionen, ein häufig sehr starker Schrumpf während des Aushärtens, der zu Spannungen in der Grenzfläche Kunstharz/Gelcoat - und damit zu schlechter Stabilität der Grenzfläche - führt, -sowie- die üblicherweise schlechte Haftung gegenüber Verbundwerkstoffen auf Basis von Epoxidharz (EP-Harz) und Vinylesterharz (VE-Harz).

Zur Anwendung in Verbindung mit EP-Verbundwerkstoffen können beispielsweise EP-Gelcoats (z.B. von der Fa. SP-Systems) eingesetzt werden. EP-Gelcoats zeigen im Vergleich mit UP-Gelcoats eine sehr viel bessere Haftung zu EP-Verbundwerkstoffen. EP-Gelcoats enthalten auch keine flüchtigen Monomeren und sind deshalb arbeitshygienisch weniger bedenklich als die meist styrolhaltigen UP-Gelcoats. Ein Nachteil von EP-Gelcoats ist aber die geringer Toleranz gegenüber Ungenauigkeiten im Mischungsverhältnis. Dies kann u.U. im gehärteten Gelcoat zu einer stark verminderten mechanischen Beständigkeit führen. Die stark exotherme Härtungsreaktion bedingt ferner, dass bei technisch sinnvollen Ansatzgrößen nur geringe Beschleunigerkonzentrationen einsetzbar sind. Dies führt zu langen Klebfreizeiten und damit zu langen Formbelegungszeiten. Formbelegungszeiten sind ein entscheidender Kostenfaktor bei der Herstellung von Bauteilen aus Faserverbundwerkstoffen.

Um ein frühzeitiges Überlaminieren zu ermöglichten, werden oft EP-Gelcöats mit hoher Vernetzungsdichte eingesetzt. Eine hohe Vernetzungsdichte hat aber eine hohe Glasübergangstemperatur T_{g} des ausgehärteten Gelcoats zur Folge (z.B. T_{g} = 70 °C bei einem handelsüblichen pigmentierten EP-Gelcoat von SP-Systems). Die Einsatztemperatur von Bauteilen wie z.B. Rotorblättern, die mit solchen Gelcoats vergütet werden, liegt üblicherweise weit unter der Glasübergangstemperatur des Gelcoats. Bei diesen Einsatzbedingungen neigen solche Gelcoats dazu, bei mechanischer Belassung spröde zu brechen. Eine Möglichkeit zu flexibleren EP-Gelcoats zu gelangen ist die Verwendung von mit Nonylphenol blockierten, isocyanatterminierten Polyurethanen als Rezepturbestandteil. Dies führt zu flexibilisierten EP-Gelcoats mit verbesserter Bruchdehnung. Solche Gelcoats weisen jedoch auch vergleichsweise lange Klebfreizeiten auf. Darüber hinaus wird bei der Härtung von solchen polyurethanmodifizierten Epoxidharzsystemen Nonylphenol freigesetzt. Das ist aufgrund der Toxizität von Nonylphenol zunehmend weniger akzeptiert.

Grundsätzlich wäre deshalb Gelcoats auf Basis von aliphatischen Polyurethanen der Vorzug zu geben. Bei der Formulierung von PUR-Gelcoats ist jedoch zu berücksichtigen, dass herkömmliche Mischungen aus Polyol und Polyisocyanat erst bei sehr weit fortgeschrittener Reaktion gelieren. Dann ist aber bereits das Reaktions- und damit das Haftvermögen des PU-Gelcoats gegenüber dem für den Verbundwerkstoff verwendeten Kunstharz stark eingeschränkt (d.h. die Klebfreizeit ist vergleichsweise lang, die Laminierzeit dagegen vergleichsweise kurz) . Der Einsatz eines solchen herkömmlichen Produkts wäre prozesstechnisch schwierig zu realisieren und darüber hinaus bezüglich der Haftung Gelcoat/Kunstharz unzuverlässig.

Handelsübliche aliphatische PUR-Gelcoats (von Relius Coatings oder von Bergolin) weisen in der Regel vergleichsweise niedrige Glasübergangstemperaturen (< 40 °C) auf. Deshalb sind sie im Vergleich zu EP-Gelcoats weniger spröde. Bei deutlich über der maximal erreichbaren T_{g} des PUR-Gelcoats liegenden Härtungstemperaturen (> 80 °C) zeigen diese Produkte nach Entformung häufig Oberflächendefekte in Form von Einfallstellen. Dies schränkt den Bereich der Härtungstemperaturen, in dem ein solches Produkt eingesetzt werden kann, stark ein. Aus diesem Grund ist der Einsatz von PUR-Gelcoats bei Härtungstemperaturen von > 80 °C nur bedingt möglich und/oder erfordert ein aufwendiges Nacharbeiten zum Glätten der Bauteiloberfläche.

Demzufolge liegt der Erfindung die Aufgabe zugrunde, Komponenten für ein Gelcoat-Harzsystem auf Polyürethan-Basis für Epoxidharz-und/oder Vinylesterharz-Verbundwerkstoffe zur Verfügung zu stellen, die die genannten Nachteile nicht aufweisen. Die Komponenten für das Gelcoat-Harzsystem sollen
- eine vergleichsweise lange Laminierzeit bei für das Mischen und das Einbringen in die Form ausreichender Topfzeit und für die Filmbildung hinreichenden, aber vergleichsweise kurzen Gel- und Klebfreizeiten ergeben,
- einfach verarbeitbar sein (d.h. keine zusätzliche Geräte für eine Heißapplikation und/oder Sprühapplikation erfordern),
- eine gute Haftung zwischen Gelcoat und Kunstharz ergeben (bei langen Laminierzeiten),
- ein Gelcoat ergeben, das hinreichende Bruchdehnung aufweist, und nicht zur Bildung von Haarrissen zu neigen,
- eine glatte Bauteiloberfläche, frei von Einfallstellen auch bei Härtungstemperaturen zwischen 80 °C und 130 °C, erzeugen,
- preiswert sein und
- bei der Härtung keine toxischen oder umweltschädlichen Substanzen freisetzen.

Dazu wären zwar Polyurethan-Gelcoats mit einer hohen Vernetzungsdichte grundsätzlich besonders gut geeignet. Eine hohe Vernetzungsdichte setzt den Einsatz eines hochfunktionellen Polyols voraus. Mit der Verwendung eines hochfunktionellen Polyols geht aber eine sehr kurze Laminierzeit einher. Deshalb war es auch eine Aufgabe der vorliegenden Erfindung, Komponenten für ein Polyurethan-Gelcoat zur Verfügung zu stellen, die einerseits ein Gelcoat mit hoher Vernetzungsdichte ergeben, andererseits aber eine Verlängerung der Laminierzeit ermöglichen.

Diese Aufgaben werden erfindungsgemäß durch die Verwendung einer Zweikomponenten-Zusainmensetzung, die
A) eine Polyolkomponente, die ein oder mehrere Polyole und ein oder mehrere aromatische Amine enthält und eine Hydroxylgruppenkonzentration von 0,5 bis 10 mol Hydroxylgruppen je kg Polyolkomponente aufweist, und
B) eine Polyisocyanatkomponente umfasst, die ein oder mehrere aromatische Polyisocyanate enthält,
zur Herstellung von Polyurethan-Gelcoats für Kunstharz-Verbundwerkstoffe gelöst, wobei das Kunstharz Epoxidharz und/oder Vinylesterharz umfasst und beim Inkontaktbringen mit dem Gelcoat nicht oder nicht vollständig ausgehärtet ist. Die Polyolkomponente A) ist wie in Anspruch 1 definiert.

Die Erfindung beruht u.a. darauf, dass gefunden wurde, dass aromatische Amine einer Polyolkomponente zur Herstellung von Polyurethan-Gelcoats zugesetzt werden können und die aus der erfindungsgemäßen Polyolkomponente und einer Polyisocyanatkomponente hergestellte Mischung besonders gute Verarbeitungseigenschaften bei der Herstellung von Polyurethan-Gelcoats aüfweist und darüber hinaus ein mechanisch besonders beständiges Gelcoät ergibt. Erfindungsgemäße ausgehärtete Gelcoats weisen vorzugsweise eine Shore D Härte von mehr als 65 (bestimmt nach DIN EN ISO 868) und eine Bruchdehnung bei 23°C von vorzugsweise größer als 5 % (bestimmt nach DIN EN ISO 527) auf und ergeben eine ausgezeichnete Haftung zu Epoxid- und Vinylesterharzen in Verbundmaterialien. Als Epoxidharze und Vinylesterharze sind alle handelsüblichen Materialien geeignet. Der Fachmann ist in der Lage, in Abhängigkeit von der Anwendung ein geeignetes Epoxid- oder Vinylesterharz auszuwählen.

Der gehärtete Verbundwerkstoff hat an der Grenzfläche Kunstharz-Polyurethan-Gelcoat eine Haftfestigkeit, die über der Bruchfestigkeit des Laminierharzes liegt, d.h. in der Stempelabrissprüfung tritt ein Kohäsionsbruch im Laminat bzw. Laminierharz auf. Erfindungsgemäß hergestellte Polyurethan-Gelcoats weisen vorzugsweise bei 23 °C eine Bruchdehnung (gemessen nach DIN EN ISO 527) von mindestens 3 %, bevorzugt größer 4 %, insbesondere größer 5 % auf. Bei Bruchdehnung wird am freien Gelcoat bestimmt (nicht im Verbundwerkstoff).

Das Kunstharz umfasst Epoxidharz und/oder Vinylesterharz, d.h. es ist ein Kunstharz auf Basis von Epoxidharz und/oder Vinylesterharz. In einer bevorzugten Ausführungsform ist das Kunstharz Epoxidharz und/oder Vinylesterharz, und in einer besonders bevorzugten Ausführungsform ist das Kunstharz Epoxidharz.

Das eingesetzte Kunstharz ist bei der Herstellung des Verbündwerkstoffs, d.h. beim Inkontaktbringen mit dem Gelcoat, nicht oder nicht vollständig ausgehärtet. Vorzugsweise ist das Polyurethan-Gelcoat beim Inkontaktbringen mit dem Kunstharz (vorzugsweise beim Aufbringen des Kunstharzes) nicht vollständig ausgehärtet. Dies bedeutet, dass in dem Gelcoat beim Inkontaktbringen mit dem Kunstharz (vorzugsweise beim Aufbringen des Kunstharzes) vorzugsweise die Umsetzung von Isocyanat- mit Hydroxylgruppen zu Urethangruppen noch nicht vollständig abgeschlossen ist. Es sind in allen Ausführungsformen Kunstharze bevorzugt, die Glasfasergewebe und/oder Glasfaservlies umfassen, wobei das eingesetzte Kunstharz besonders bevorzugt ein Prepreg ist, insbesondere ein Epoxy-Prepreg mit Glasfasergewebe und/oder Glasfaservlies. Das Kunstharz kann allerdings auch als Injektionsharz in einem Injektionsverfahren auf das Gelcoat aufgebracht werden.

Dabei ist die Verwendung der Zweikomponenten-Zusammensetzung in einem In-Mold-Verfahren besonders bevorzugt, bei dem das Polyurethan-Gelcoat zum Teil, aber noch nicht vollständig ausgehärtet ist und das Kunstharz beim Inkontaktbringen mit dem Gelcoat nicht oder nicht vollständig ausgehärtet ist. Bei dieser Anwendung ist das Kunstharz vorzugsweise teilweise, aber noch nicht vollständig ausgehärtet, und umfasst insbesondere Verstärkungsmaterial, wie Glasfasergewebe und/oder Glasfaservlies.

Insbesondere betrifft die Erfindung die Verwendung einer Zweikömponenten-Zusammensetzung, bei der die Polyolkomponente A), die eine Hydroxylgruppenkonzentration von 0,5 bis 10 mol Hydroxylgruppen je kg Polyolkomponente aufweist,
A1) ein oder mehrere niedrigmolekulare Polyole mit einem Molekulargewicht von 150 bis 600 g/mol und einer Hydroxylgruppenkonzentration von 4 bis 20 mol Hydroxylgruppen je kg niedrigmolekulares Polyol,
A2) ein oder mehrere höhermolekulare Polyole und
A3) ein oder mehrere aromatische Amine enthält.

### 1. Polyolkomponente

Die Hydroxylgruppenkonzentration der Polyolkomponente beträgt 0,5 bis 10 mol je kg Polyolkomponente. In bevorzugten Ausführungsformen beträgt die Hydroxylgruppenkonzentration der Polyolkomponente 1 bis 7, bevorzugt 2,5 bis 5, insbesondere 2,0 bis 4 mol Hydroxylgruppen je kg Polyolkomponente.

Das in der erfindungsgemäß eingesetzten Polyolkomponente enthaltene Polyol kann grundsätzlich jedes zur Herstellung von Polyurethanen übliche Polyol sein, beispielsweise Polyesterpolyol, Polyetherpolyol, Acrylatpolyol und/oder Polyol auf Basis dimerer Fettsäuren. Die Verwendung von Polyetherpolyolen ist aber in allen Ausführungsformen der Erfindung bevorzugt.

Dabei ist die Verwendung von Polyolgemischen aus niedrigmolekularem Polyol und höhermolekularem Polyol bevorzugt. Höhermolekulares Polyol und niedrigmolekulares Polyol können allerdings auch einzeln verwendet werden, mit der Maßgabe, dass die Hydroxylgruppenkonzentration der Polyolkomponente 0,5 bis 10 mol je kg Polyolkomponente beträgt.

Die erfindungsgemäß bevorzugt eingesetzte Polyolkomponente zeichnet sich dadurch aus, dass sie mindestens ein Polyol mit vergleichsweise geringem Molekulargewicht und vergleichsweise hoher Hydroxylgruppenkonzentration c_{OH} enthält. Das niedrigmolekulare Polyol (bzw. die gegebenenfalls zwei, drei, vier etc. niedrigmolekularen Polyole) unterstützt (unterstützen) die vorteilhafte Wirkung des aromatischen Amins und führt (führen) dazu, dass bereits zu Beginn der Reaktion der Polyolkomponente mit einer Polyisocyanatkomponente (nach ausreichender Topfzeit und vertretbarer Gelzeit) ein sehr engmaschiges Netzwerk gebildet wird, welches die gewünschte mechanische Stabilität der gelierten Gelcoatschicht sicherstellt. Dadurch wird die Wirkung des in der Polyolkomponente enthaltenen aromatischen Amins verstärkt.

### Niedrigmolekulares Polyol

Erfindungsgemäß ist ein "niedrigmolekulares Polyol" definiert als ein Polyol mit einem Molekulargewicht von 150 bis 600 g/mol (bevorzugt 200 bis 600 g/mol, bevorzugter 300 bis 500 g/mol und insbesondere 400 bis 500 g/mol) und einer Hydroxylgruppenkonzentration von 4 bis 20 mol Hydroxylgruppen je kg niedrigmolekulares Polyol.

Bevorzugt liegt die Hydroxylgruppenkonzentration c_{OH} im Bereich von 4,5 bis 15, bevorzugter 5 bis 12 und insbesondere im Bereich von 6 bis 10 mol Hydroxylgruppen je kg niedrigmolekulares Polyol.

Grundsätzlich sind erfindungsgemäß als niedrigmolekulare Polyole alle geradkettigen oder verzweigten zur Herstellung von Polyurethanen üblichen Polyole, beispielsweise Polyesterpolyol, Polyetherpolyol, wie Polyetherglykol, Acrylatpolyol und/oder Polyol auf Basis dimerer Fettsäuren und deren Mischungen geeignet. Beispiele sind die nachfolgend aufgeführten niedrigmolekularen Polyole:
- ein Polyol auf Acrylatbasis mit einer Funktionalität von etwa 2,3 und einem Hydroxylgruppengehalt von 12,5 mol/kg,
- ein Polyetherpolyol mit einer Funktionalität von 3 und einem Hydroxylgruppengehalt von etwa 16,5 mol/kg,
- ein Umsetzungsprodukt aus Trimethylolpropan und Polycaprolacton mit einer Funktionalität von etwa 3 und einem Hydroxylgruppengehalt von etwa 10 mol/kg.

Bevorzugt liegt der Anteil niedrigmolekulares Polyol (d.h. die Summe aller niedrigmolekularen Polyole in der Polyolkomponente) im Bereich von 2 bis 70 Gew.-%, bevorzugter 5 bis 60 Gew.-%, insbesondere 10 bis 50 Gew. -% wie 20 bis 45 Gew.-%, wobei ein Anteil von 35 bis 45 Gew.-% besonders bevorzugt ist, bezogen auf die Gesamtmasse von Polyol und aromatischem Amin (bzw. die Summe der Bestandteile A1, A2 und A3) der Polyolkomponente.

### Höhermolekulares polyol

Das in der erfindungsgemäß bevorzugt eingesetzten Polyolkomponente enthaltene höhermolekulare Polyol kann grundsätzlich jedes zur Herstellung von Polyurethanen übliche Polyol sein, beispielsweise Polyesterpolyol, Polyetherpolyol, Acrylatpolyol und/oder Polyol auf Basis dimerer Fettsäuren. Dabei umfassen die Bestandteile A1 und A2 alle in der erfindungsgemäß eingesetzten Polyolkomponente enthaltenen Polyole, d.h. ein Polyol, das kein niedrigmolekulares Polyol gemäß oben genannter Definition ist, gilt im Allgemeinen für die Zwecke der vorliegenden Beschreibung als ein höhermolekulares Polyol. Bevorzugte höhermolekulare Polyole weisen ein Molekulargewicht von mehr als 600 bis 8000, bevorzugt mehr als 600 bis 6000, insbesondere mehr als 600 bis 4000 g/mol höhermolekulares Polyol auf.

Geeignete höhermolekulare Polyole sind z.B. in der genannten DE-T-690 11 540 beschrieben. Bevorzugte höhermolekulare Polyole sind Polyetherpolyole (Polyalkoxylenverbindungen), die durch Polyaddition von Propylenoxid und/oder Ethylenöxid auf Starter niedrigen Molekulargewichts mit OH-Gruppen und einer Funktionalität von 2 bis 8 gebildet werden.

Weitere typische höhermolekulare Polyole sind die Polyetherpolyole auf Basis von Polyethylenoxid, Polypropylenoxid oder beiden, die eine Funktionalität von 2 bis 4 haben, wobei solche höhermolekularen Polyetherpolyole bevorzugt sind, die eine Hydroxylgruppenkonzentration im Bereich von 0,5 bis 2,5 mol/kg höhermolekulares Polyetherpolyol aufweisen, bevorzugt 0,75 bis 1,5 mol Hydroxylgruppen pro kg. Das hohermolekülare Polyol (bzw. die gegebenenfalls zwei, drei, vier etc. höhermolekularen Polyole) der Polyolkomponente verstärkt (verstärken) die die Laminierzeit verlängernde Wirkung des aromatischen Amins. Dies ist wichtig, um eine gute Haftung zum Kunstharz des Verbundwerkstoffs zu erreichen.

Besonders bevorzugte höhermolekulare Polyole sind:
► ein Polyetherpolyol auf Basis von Polytetrahydrofuran mit einer Funktionalität von etwa 2 und einem Hydroxylgruppengehalt von 1 mol/kg,
► ein Polyetherpolyol mit einer Funktionalität von 3 und einem Hydroxylgruppengehalt von etwa 1 mol/kg,
► ein Umsetzungsprodukt aus Neopentylglykol und Polycaprolacton mit einer Funktionalität von etwa 3 und einem Hydroxylgruppengehalt von etwa 1 mol/kg.

Bevorzugt liegt der Anteil höhermolekulares Polyol (d.h. die Summe aller höhermolekularen Polyole) in der Polyolkomponente im Bereich von 75 bis 10 gel.-%, bevorzugt 65 bis 10 Gew.-%, bevorzugter 50 bis 12 Gew.-% und insbesondere 30 bis 15 Gew.-%, bezogen auf die Gesamtmasse Polyol und aromatisches Amin (bzw. die Summe der Bestandteile A1, A2 und A3) der Polyolkomponente. In einer bevorzugten Ausführungsform ist die Polyolkomponente frei von aliphatischen Dicarbonsäuren.

### Aromatisches Amin mit geringer Reaktivität gegenüber Isocyanaten

Geeignete aromatische Amine sind z.B. in den US-A-4 950 792, US-A-6 013 692, US-A-5 026 815, US-A-6 046 297undUS-A-5 962 617 offenbart.

Bevorzugte aromatische Amine zeichnen sich dadurch aus, dass sie, gelöst in Toluol (20 Gew.-% Amin in Toluol), und bei 23 °C gemischt mit einer äquimolaren Menge eines oligomeren HDI-Isocyanats (Hexamethylendiisocyanats) mit einem NCO-Gehalt von etwa 5,2 mol/kg und einer Viskosität im Bereich von 2750 bis 4250 mPas, gelöst in Toluol (80 Gew.-% Isocyanat in Toluol), eine Gelzeit von mehr als 30 Sekunden, bevorzugt mehr als 3 Minuten, bevorzugter mehr als 5 Minuten und insbesondere mehr als 20 Minuten ergeben.

Erfindungsgemäß bevorzugt eingesetzte aromatische Amine sind Methylenbisaniline, insbesondere 4,4'-Methylenbis(2,6-dialkylaniline), bevorzugt die in der US-A-4 950 792 beschriebenen nichtmutagenen Methylenbisaniline. Besonders geeignet sind die in der folgendenTabelle laufgelisteten4,4'-Methylenbis(3-R¹-2-R²-6-R³-aniline).

**Tabelle 1**

| 4, 4'-Methylenbis(3-R¹-2-R²-6-R³-aniline) | | | |
|---|---|---|---|
| | R¹ | R² | R³ |
| Lonzacure M-DMA | H | CH₃ | CH₃ |
| Lonzacure M-MEA | H | C₂H₅ | CH₃ |
| Lonzacure M-DEA | H | C₂H₅ | C₂-H₅, |
| Lonzacure M-MIPA | H | C₃H₇ | CH₃ |
| Lonzacure M-DIPA | H | C₃H₇ | C₃H₇ |
| Lonzacure M-CDEA | Cl | C₂H₅ | C₂H₅ |

Das erfindungsgemäß besonders bevorzugte aromatische Amin ist 4,4'-Methylenbis(3-chlor-2,6-diethylanilin), Lonzacure M-CDEA.

Bevorzugt liegt der Anteil aromatisches Amin in der Polyolkomponente (d.h. die Summe aller aromatischen Amine in der Polyolkomponente) im Bereich von 0,1 bis 20 Gew.-%, bevorzugt 0,3 bis 10 Gew.-%, bevorzugter 0,5 bis 5 Gew.-% und insbesondere 1 bis 3 Gew.-%, bezogen auf die Gesamtmasse Polyol und aromatisches Amin (bzw. die Summe der Bestandteile A1, A2 und A3) der Polyolkomponente. Die Polyolkomponente kann ferner aliphatisches Amin enthalten, beispielsweise einen oder mehrere Aminoalkohol(e).

### Katalysatoren

beschleunigen die Polymerisationsreaktion zwischen Polyolkomponente und Polyisocyanatkomponente. Grundsätzlich können in der Polyolkomponente alle zur Verwendung in Polyurethanen bekannten Katalysatoren verwendet werden, bevorzugt die in der DE-T-690 11 540 offenbarten Blei-, Wismut- und Zinn-Katalysatoren, darüber hinaus auch der stark basische Amin-Katalysator Diazabicyclo(2,2,2)octan-1,4 sowie Zirkonverbindungen.

Ein erfindungsgemäß besonders bevorzugter Katalysator zur Verwendung in einer Polyolkomponente ist Dibutylzinndilaurat (DBTL).

Eine erfindungsgemäß eingesetzte Polyolkomponente kann bis zu 1 Gew.-%, bevorzugter 0,05 bis 0,5 Gew.-%, insbesondere etwa 0,3 Gew.-% Katalysator enthalten, beispielsweise 0,3 Gew.-%, bezogen auf die Gesamtmasse der Polyolkomponente.

### Füllstoffe

Die erfindungsgemäße Polyolkomponente enthält bevorzugt größere Mengen eines oder mehrerer Füllstoffe, wobei für die Zwecke der vorliegenden Beschreibung "Pigmentstoffe" in die Definition des Begriffs "Füllstoff" eingeschlossen sind. Bevorzugte Füllstoffe sind Talkum, Dolomit, gefälltes CaCO₃, BaSO₄, Quarzmehl, Kieselerde, Titandioxid, Molekularsiebe und (vorzugsweise calciniertes) Kaolin. Der Gehalt einer Polyolkomponente an Füllstoff liegt bevorzugt im Bereich von 10 bis 80 Gew.-%, bevorzugter 20 bis 70 Gew.-%, insbesondere 35 bis 55 Gew.-% wie 40 bis 50 Gew.-%, bezogen auf die Gesamtmasse der Polyolkomponente. Dabei sind Mischungen von Füllstoffen bevorzugt, beispielsweise Mischungen von zwei, drei oder vier Füllstoffen.

Darüber hinaus können in der Polyolkomponente gemahlene Glasfasern enthalten sein, beispielsweise gemahlene Glasfasern einer Länge von weniger als 500 µm. Diese Glasfasern verhindern das Weiterreißen eines eventuellen Risses.

### 2. Polyisocyanatkomponente

Die Polyisocyanatkomponente enthält ein oder mehrere aromatische Polyisocyanate. In den erfindungsgemäß eingesetzten aromatischen Polyisocyanaten sind die Isocyanatgruppen direkt an aromatische Systeme wie Phenylengruppen gebunden. Dabei ist die Verwendung von monomeren, oligomoren und polymeren Polyisocyanaten möglich. Geeignete aromatische Isocyanate sind beispielsweise "Szycher's Handbook of Polyurethanes", CRC-Press, Boca Raton, 1999, beschrieben. Erfindungsgemäß bevorzugt eingesetzte aromatische Polyisocyanate sind Toluol-2,4- oder -2,6-diisocyanat, 4,4'-Methylendiphenyldiisocyanat (MDI), 2,4'-Methylendiphenyldiisocyanat, oligomeres Methylendiphenyldiisocyanat (PMDI), p-Phenylendiisocyanat (PDI) und Napthalen-1, 5-diisocyanat (NDI). Zusätzlich können auch aliphatische Polyisocyanate in der Polyisocyanatkomponente enthalten sein, beispielsweise die in der DE-T2-690 11 540 beschriebenen Polyisocyanate.

Die in der Polyisocyanatkomponente als Füllstoffe einsetzbaren Kieselsäuren sind insbesondere silanisierte pyrogene Kieselsäuren. Durch den bevorzugten Gehalt der Polyisocyanatkomponente an Kieselsäure (einem Thixotropiermittel) wird sichergestellt, dass Polyolkomponente und Polyisocyanatkomponente infolge der ähnlichen Viskositäten der Komponenten gut mischbar sind und darüber hinaus die Mischung der Komponenten an einer vertikalen Fläche bis zu 1 mm Nassschichtdicke nicht abläuft. Die Menge liegt bevorzugt im Bereich von 0,1 bis 5 Gew.%, bevorzugter 0,5 bis 3 Gew.%, insbesondere 1 bis 2 Gew.%, bezogen auf die Gesamtmasse der Polyisocyanatkomponente.

### Katalysatoren

Die der Polyolkomponente zusetzbaren Katalysatoren können auch in der Polyisocyanatkomponente, oder anstelle in der Polyolkomponente in der Polyisocyanatkomponente, in den genannten Konzentrationen enthalten sein, wobei in der Polyisocyanatkomponente als Katalysatoren Zirkonverbindungen bevorzugt sind.

### 3. Additive (Siehe Lehrbuch: "Lackadditive", Johan H. Bielemann, Weinheim, Wiley-VCH, 1998).

Darüber hinaus können entweder die Polyolkomponente oder die Polyisocyanatkomponente, oder beide Komponenten, zusätzlich ein oder mehrere Additive ausgewählt aus Entschäumungsmitteln, Dispergiermitteln und Entlüftungsmitteln enthalten.

### Entschäumungsmittel

können in einer Menge bis 2,0 Gew.-%, bevorzugt bis 1,0 Gew.-% vorhanden sein, bezogen auf die Gesamtmasse der Komponente, in der sie eingesetzt werden.

### Entlüftungsmittel

können in einer Menge bis 2,0 Gew.-%, bevorzugt bis 1,0 Gew.-% enthalten sein, bezogen auf die Gesamtmasse der Komponente, in der sie eingesetzt werden. Viele Entschäumungsmittel wirken gleichzeitig als Entlüftungsmittel.

### Dispergiermittel

können in einer Menge bis 2,0 Gew.-%, bevorzugt bis 1,0 Gew.-% enthalten sein, bezogen auf die Gesamtmasse der Komponente, der sie zugesetzt werden.

Beim Anmischen der Polyolkomponente wird (werden) typischerweise das (die) Polyol(e) mit Additiven in einem Vakuum-Dissolver vorgelegt. Die Füllstoffe und Pigmente werden dann im Vakuum in dem Polyol (den Polyolen) dispergiert. Zum Anmischen der Polyisocyanatkomponente wird üblicherweise das Polyisocyanat vorgelegt und mit den entsprechenden Additiven vermischt. Anschließend werden der Füllstoff und das Thixotropiermittel im Vakuum eindispergiert.

Die relativen Mengen von Polyolkomponente und Polyisocyanatkomponente werden so gewählt, dass Hydroxylgruppen und Isocyanatgruppen im jeweils gewünschten molaren Verhältnis reagieren. Das molare Verhältnis von Hydroxylgruppen zu Isocyanatgruppen (OH : NCO) liegt üblicherweise im Bereich von 1 : 3 bis 3 : 1, bevorzugt 1 : 2 bis 2 : 1, bevorzugter 1 : 1,5 bis 1,5 : 1. Gemäß einer besonders bevorzugten Ausführungsform liegt das Verhältnis OH : NCO nahe einem stöchiometrischen molaren Verhältnis von 1 : 1, d.h. im Bereich von 1 : 1,2 bis 1,2 : 1, bevorzugt 1 : 1,1 bis 1,1 : 1, und insbesondere bevorzugt ist eine äquimolare Umsetzung, d.h. die relativen Mengen Polyolkomponente und Polyisocyanatkomponente werden so gewählt, dass das molare Verhältnis der Hydroxylgruppen zu Isocyanatgruppen bei etwa 1 : 1 liegt.

Die Gelierung der Mischung der zwei Komponenten erfolgt entweder bei Raumtemperatur oder, wenn eine beschleunigte Gelierung gewünscht wird, bei erhöhter Temperatur. Beispielsweise kann bei einer Temperatur von 40 °C, 60 °C oder auch 80 °C geliert werden. Bei der besonders bevorzugten Mischung aus den Komponenten der erfindungsgemäßen Zweikomponenten-Zusammensetzung ist aber eine Temperaturerhöhung zur Beschleunigung der Gelierung nicht zwingend notwendig.

Das Kunstharz umfasst vorzugsweise ein oder mehrere Verstärkungsmaterialien, wie beispielsweise Gewebe, Gelege, Vliese oder durch Weben oder Vernähen, Versteppen oder Verkleben von Geweben, Gelegen oder Vliesen hergestellte Vorformlinge. Diese können aus Glas-, Kohlenstoff-, Aramid- oder Polyesterfasern oder aus anderen Kunststoffasern bestehen. Als Verstärkungsmaterial sind Glasfasergewebe und/oder Glasfaservlies sowie Kohlefasergelege und -gewebe bevorzugt.

Wenn die Bildung eines mechanisch ausreichend stabilen Gels abgeschlossen ist, wird innerhalb der Laminierzeit Epoxid- und/oder Vinylesterharz und gewünschtenfalls Glasfasergewebe oder Glasfaservlies auf das Gelcoat aufgetragen. Durch erfindungsgemäße Polyolkomponenten und erfindungsgemäße Zweikomponenten-Zusammensetzungen wird erreicht, dass die für das Äuflaminieren zur Verfügung stehende Laminierzeit im Bereich von etwa 20 Minuten und 72 Stunden, typischerweise bei etwa 48 Stunden liegt. Das

Auflaminierverfahren auf Gelcoats unterscheidet sich nicht von den Laminierverfahren, die ohne Verwendung von Gelcoats angewendet werden und z.B. in "Faserverbundbauweisen" von M. Flemming, G. Ziegmann, S. Roth, Springer-Verlag 1996, Berlin, Heidelberg, New York, beschrieben sind. Das Härten der Gelcoats erfolgt üblicherweise bei erhöhter Temperatur.

Die Erfindung betrifft ferner ein Verfahren zur Herstellung von Kunstharz-Verbundwerkstoffen mit Polyurethan-Gelcoats, das
(i) das Mischen einer Zweikomponenten-Zusammensetzung, die
   A) eine Polyolkomponente, die ein oder mehrere Polyole und ein oder mehrere aromatische Amine enthält und eine Hydroxylgruppenkonzentration von 0,5 bis 10 mol Hydroxylgruppen je kg Polyolkomponente aufweist, und
   B) eine Polyisocyanatkomponente umfaßt, die ein oder mehrere aromatische Polyisocyanate enthält,
   und mindestens teilweises (und bevorzugt teilweises) Härten der Mischung und
(ii) das Inkontaktbringen der Mischung mit Kunstharz umfasst, wobei das Kunstharz Epoxidharz und/oder Vinylesterharz umfasst und beim Inkontaktbringen mit dem Gelcoat nicht oder nicht vollständig ausgehärtet ist.

Dabei ist Polyolkomponente wie in Anspruch 18 definiert. Ferner betrifft die Erfindung einen Kunstharz-Verbundwerkstoff mit Polyurethan-Gelcoat, der nach dem erwähnten Verfahren erhältlich ist. Ein besonders bevorzugter Verbundwerkstoff ist ein Windflügel, d.h. ein Rotorblatt für Windkraftanlagen, oder ein Teil davon.

Die erfindungsgemäße Zweikomponenten-Zusammensetzung bietet die folgenden Vorteile:
► Sie ist ein System aus lediglich zwei Komponenten und deshalb einfach zu verarbeiten.
► Die Topfzeit beträgt lediglich 5 bis 15 Minuten.
► Die Mischung aus Polyolkomponente und Polyisocyanatkomponente ist innerhalb von 20 bis 70 Minuten klebfrei, auch bei 0,5 mm Schichtdicke und Raumtemperatur. Dafür ist keine Erwärmung notwendig.
► Die Laminierzeit liegt bei Raumtemperatur bei mehr als 72 Stunden, damit sind sehr gute Voraussetzungen für die Haftung zu Kunstharz-Laminaten gegeben.
► Die Mischung der zwei Komponenten ist bis zu 1 mm Nassschichtdicke an einer vertikalen Fläche ablaufsicher.
► Infolge der bevorzugt mit Kieselsäure eingestellten Viskosität der Polyisocyanatkomponente ist eine gute Mischbarkeit der zwei Komponenten gegeben.
► Die bei der Herstellung der zwei Komponenten eingesetzten Verbindungen sind arbeitshygienisch gut handhabbar und bei der Verarbeitung emissionsfrei.
► Die zwei Komponenten ergeben ein transparentes Gelcoat, können deshalb beliebig pigmentiert werden. Transparente Gelcoats haben außerdem den Vorteil, das Laminierfehler wie z.B. Blasen im Harz, nicht getränkte Bereiche des Verstärkungsmaterials usw. unmittelbar nach der Entformung erkannt werden können. Dies verhindert Reklamationen.
► Die gemischten Komponenten sind auch als Spachtelmasse oder als Beschichtung, die nicht im In-Mould-Verfahren appliziert werden muss, einsetzbar.
► Die Mischung der Komponenten ist selbstverlaufend.
► Eine vollständige Härtung der Mischung der zwei Komponenten kann bereits bei Temperaturen von 80 bis 160 °C innerhalb von 30 Minuten bis 2 Stunden erreicht werden.

Das erfindungsgemäß hergestellte Gelcoat besitzt die folgenden vorteilhaften Eigenschaften:
► Bei kurzer Gel- und Klebfreizeit eine lange Laminierzeit.
► Nach der Entformung erhält man glatte Bauteiloberflächen ohne Oberflächendefekte obwohl die Glasübergangstemperatur T_{G} mit ca. 50 °C vergleichsweise niedrig ist.
► Bei Einsatztemperatur eine ausreichende hohe Härte (Shore Härte D > 65).
► Keine Freisetzung von Nonylphenol oder anderer toxischer oder umweltschädlicher Substanzen bei der Härtungsreaktion.
► Hohe Hydrolysebeständigkeit.
► Hohe Chemikalienbeständigkeit.
► Hohe Abriebbeständigkeit.
► Gute Schleifbarkeit. Eine Nachbehandlung des Gelcoats ist im Prinzip nicht notwendig. Werden jedoch große Bauteile aus mehreren Einzelteilen zusammengesetzt, ist es erforderlich, die Stoßkanten durch Spachtelmassen zu verschließen. Überschüssiger Spachtel wird in der Regel abgeschliffen. Um glatte Übergänge zu erhalten, ist es notwendig, dass das Gelcoat gut schleifbar ist. Das gleiche gilt, wenn Reparaturarbeiten an einer mechanisch geschädigten Fläche erforderlich werden.
► das Gelcoat ist deutlich kostengünstiger als z.B. aliphatische PUR-Gelcoats und sogar günstiger als flexibilisierte EP-Gelcoats.

Die Erfindung wird durch die folgenden Beispiele verdeutlicht.

### Beispiele

Verwendete Testmethoden sind im Folgenden beschrieben:

### Testmethode 1:

### Hinreichend geringe Reaktivität bevorzugter Amine

Zur Bestimmung der Gelzeit wird das aromatische Amin, gelöst in Toluol (20 Ges.-% Amin in Toluol), bei 23 °C mit einer äquimolaren Menge eines oligomeren HDI-Isocyanates mit einem NCO-Gehalt von etwa 21,8 % und einer Viskosität des lösungsmittelfreien Isocyanats von 2750 bis 4250 mPas, gelöst in Toluol (80 Gew.-% Isocyanat in Toluol, z.B. Desmodur N3300, Bayer AG) gemischt. Zur Bestimmung der Gelzeit dient ein Sunshine-Geltime-Meter der Firma Sunshine Scientific Instruments.

### Testmethode 2:

### Bestimmung von T_{G}-Werten von Gelcoats

Die Glasübergangstemperatur wurde nach DIN 51007 durch DSC-Messungen bestimmt. Dazu wurden ein ausgehärteter Gelcoat-Probekörper mit einer Rate von 10 K/min von -10 °C auf 250 °C erwärmt und die Glasübergangstemperatur aus dem Wärmefluss durch die Probe nach oben genannter Norm bestimmt. Das dazu eingesetzte Gerät ist ein TC11K mit einer Messzelle DSC 30 der Firma Mettler.

### Testmethode 3:

### Prüfung der Haftung zwischen Gelcoat und Laminat

Ein 3 cm breiter und 20 cm langer Laminatstreifen von ca. 2 mm Dicke, der mit einer 0,7 mm dicken Schicht eines Gelcoats beschichtet ist, wird in einer Biegeprüfung nach DIN EN ISO 1519 über einen 5 mm-Dorn gebröchen. Die Bruchkante wird visuell beurteilt. Es wird unterschieden zwischen:
a) "Keine Haftung": d.h. Ablösung der Gelcoat-Schicht vom Laminat schon vor oder während des Biegeversuchs.
b) "Teilweise Haftung": d.h. Delamination in der Grenzfläche Gelcoat-Laminat (Adhäsionsbruch) beim Bruch.
c) "Vollständige Haftung": d.h. keine Ablösung der Gelcoat-Schicht beim Bruch des Verbundbauteils.

### Beispiel 1: Anwendung der Testmethode 1

Die Gelzeit bei Verwendung aromatischer Amine wurde gemäß Testmethode 1 bestimmt. Die Ergebnisse mit Aminen der Firma Lonza sind in der folgenden Tabelle 2 dargestellt:

**Tabelle 2**

| Aromatisches Amin | Gelzeit |
|---|---|
| M-DEA | 3575=5min57s |
| M-MIPA | 221s=4min41s |
| M-CDEA | 2635s=43min55s |
| M-DIPA | 166s=2min46s |

### Beispiel 2: Herstellung von Polyolkomponenten

Es wurden Polyolkomponenten formuliert, deren Bestandteile sich aus der folgenden Tabelle 3 ergeben.

**Tabelle 3**

| **Polyolformulierung** | **PA** | **PB** |
|---|---|---|
| | Erfindungsgemäß | Nicht erfindungsgemäß |
| | Gewichtsteile | Gewichtsteile |
| Polyetherpolyol (OH-Gehalt ca. 7 mol/kg | 38 | |
| Polyetherpolyol (OH-Gehalt ca. 1 mol/kg | 20 | 60 |
| 4,4'-Methylen-bis(3-chlor-2,6-diethylanilin) | 2 | |
| Füllstoffe (z.B. Talkum und Titandi-oxid) | 30 | 30 |
| Molekularsieb | 10 | 10 |
| Katalysator (z.B. DBTL) | 0,2 | 0,2 |
| Additiven | 0,5 | 0,5 |

### Beispiel 3: Polyisocyanatkomponenten

Unter Verwendung der in der folgenden Tabelle 4 aufgeführten Bestandteile wurden Polyisocyanatkomponenten formuliert.

**Tabelle 4**

| **Polyisocyanatkomponente** | **HA** [Gewichtsteile] |
|---|---|
| | Gewichtsteile |
| Oligomeres 4,4'-Diphenylmethan-diisocyanat (MDI) (NCO-Gehalt ca. 7,5 mol/kg) | 97,5 |
| Pyrogene Kieselsäure | 2 |
| Additive | 0,5 |

### Beispiel 4: Herstellung und Untersuchung von Gelcoats

In der folgenden Tabelle 5 sind die Herstellung von Gelcoats und deren Tests zusammengefasst. Die Gelcoats wurden hergestellt, indem je eine Polyolkomponente und eine Polyisocyanatkomponente, auf 20,5 bis 24 °C temperiert, in einem solchen Verhältnis gemischt wurden, dass sich ein stöchiometrisches Verhältnis von Isocyanatgruppen zu Hydroxylgruppen ergab. Die Mischung wurde 1 Minute lang gerührt. Die Mischung wurde in einer Schichtdicke von 500 µm auf eine Stahlform aufgetragen, die mit Lösungsmittel entfettet und mit einem Trennmittel, z.B. Zywax Watershield, behandelt worden war. Danach wurden Laminathaftung, Oberflächengüte und Glasübergangstemperatur bestimmt.

Die Bruchdehnung (nach DIN EN ISO 527) wurde an nicht-laminierten (freien) Gelcoats bestimmt, die 7h lang bei 50 °C gehärtet worden waren.

**Tabelle 5**

| **Prüfergebnisse und Abgrenzung zu bisher verfügbaren Gelcoats** | | | | |
|---|---|---|---|---|
| | Stöchiometrische Mischung aus PA und HA | Stöchiometrische Mischung aus PB und HA | Handelsüblicher EP-Gelcoat I | Handelsüblicher EP-Gelcoat II |
| Haftung zum Laminat (Testmethode 3) | | | | |
| Nach einer Laminierzeit von 1 Stunde | vollständig | teilweise | vollständig | vollständig |
| Nach einer Laminierzeit von 72 Stunden | vollständig | keine | vollständig | nicht bestimmt |
| Oberflächengüte: (visuell) | keine Einfallstellen glatte Oberfläche | sehr viele Einfallstellen | keine Einfallstellen glatte Oberfläche | keine Einfallstellen glatte Oberfläche |
| Klebfreizeit bei 20 °C | 35 Minuten | ca. 1 Stunde | 2,5 Stunden | ca. 1,5 Stunden |
| Bruchdehnung | > 6 % | > 6 % | 4,5 % | 1,5 % |
| Glasübergangstemperatur: (Testmethode 2) | 50 °C | nicht bestimmt | 40 °C | 70 °C |

### Ergebnis:

Die erfindungsgemäße Gelcoat-Formulierung zeigt im Vergleich auch nach 72 Stunden Laminierzeit und anschließender 5-stündiger Härtung des Verbundes im Vakuum-Sack bei 80 °C deutlich bessere Haftungseigenschaften als die nicht erfindungsgemäße PUR-Formulierung. Die Oberfläche der erfindungsgemäßen Gelcoat-Schicht weist keine Störungen durch Einfallstellen auf und grenzt sich damit von nicht erfindungsgemäßen PUR-Gelcoats ab. Gegenüber den handelsüblichen EP-Gelcoats zeichnet sich der erfindungsgemäße Gelcoat durch eine deutlich kürzere Klebfreizeit aus. Darüber hinaus zeigt die erfindungsgemäße Gelcoat-Formulierung deutlich höhere Bruchdehnung und Weiterreißfestigkeit als die handelsüblichen EP-Gelcoats. Der erfindungsgemäßen PUR-Gelcoat weist mit einer T_{g} von 50 °C deutlich höhere Warmformbeständigkeit als der flexibilisierte EP-Gelcoat I mit einer T_{g} von 40°C auf. Trotzdem ist der erfindungsgemäße PUR-Gelcoat mit einer Bruchdehnung von 6 % deutlich flexibler als der Gel-Coat I. Erwartungsgemäß gilt dies auch im Vergleich zu EP-Gelcoat II, der mit einer höheren T_{g} von 70 °C sehr geringe Bruchdehnungswerte aufweist.

## Patentansprüche

1. Verwendung einer Zweikomponenten-Zusammensetzung, die
A) eine Polyolkomponente, die ein oder mehrere Polyole und ein oder mehrere aromatische Amine enthält und eine Hydroxylgruppenkonzentration von 0,5 bis 10 mol Hydroxylgruppen je kg Polyolkomponente aufweist, und
B) eine Polyisocyanatkomponente umfasst, die ein oder mehrere aromatische Polyisocyanate enthält,
zur Herstellung von Polyurethan-Gelcoats für Kunstharz-Verbundwerkstoffe, wobei das Kunstharz Epoxidharz und/oder Vinylesterharz umfasst und beim Inkontaktbringen mit dem Gelcoat nicht oder nicht vollständig ausgehärtet ist,
und wobei die Polyolkomponente
A1) ein oder mehrere niedrigmolekulare Polyole mit einem Molekulargewicht von 150 bis 600 g/mol und einer Hydroxylgruppenkonzentration von 4 bis 20 mol Hydroxylgruppen je kg niedrigmolekulares Polyol und/oder
A2) ein oder mehrere höhermolekulare Polyole und
A3) ein oder mehrere aromatische Amine enthält.

2. Verwendung nach Anspruch 1, **dadurch gekennzeichnet, dass** das Gelcoat bei 23 °C eine Bruchdehnung (gemessen nach DIN EN ISO 527) von mindestens 3 %, bevorzugt größer 4 %, insbesondere größer 5 % aufweist.

3. Verwendung nach Anspruch 1 oder Anspruch 2, **dadurch gekennzeichnet, dass** das Polyurethan-Gelcoat beim Inkontaktbringen mit dem Kunstharz nicht vollständig ausgehärtet ist, wobei das Inkontaktbringen mit dem Kunstharz vorzugsweise ein Aufbringen von Kunstharz auf das Gelcoat ist.

4. Verwendung nach einem der vorhergehenden Ansprüche, **dadurch gekennzeichnet, dass** das eingesetzte Kunstharz ein oder mehrere Verstärkungsmaterialien umfasst.

5. Verwendung nach Anspruch 4, **dadurch gekennzeichnet, dass** das Verstärkungsmaterial Glasfasergewebe, Glasfaservlies, Kohlefasergewebe und/oder Kohlefasergelege ist, wobei das eingesetzte Kunstharz besonders bevorzugt ein Prepreg oder Injektionsharz, insbesondere ein Injektionsharz oder Epoxidharz-Prepreg mit Glasfasergewebe und/oder Glasfaservlies ist.

6. Verwendung nach einem der vorhergehenden Ansprüche, **dadurch gekennzeichnet, dass** die Polyolkomponente ein oder mehrere Polyetherpolyole umfasst.

7. Verwendung nach einem der vorhergehenden Ansprüche, **dadurch gekennzeichnet, dass** das aromatische Amin, gelöst in Toluol (20 Gew.-% Amin in Toluol) , bei 23 °C gemischt mit einer äquimolaren Menge eines oligomeren HDI-Isocyanats mit einem NCO-Gehalt von etwa 5,2 mol/kg und einer Viskosität im Bereich von 2750 bis 4250 mPas, gelöst in Toluol (80 Gew.-% Isocyanat in Toluol), eine Gelzeit von mehr als 30 Sekunden, bevorzugt mehr als 3 Minuten, bevorzugter mehr als 5 Minuten, insbesondere mehr als 20 Minuten (bestimmt nach E-DIN VDE 0291-2, 1997-06, Punkt 9.2.1), ergibt.

8. Verwendung nach einem der vorhergehenden Ansprüche, **dadurch gekennzeichnet, dass** das aromatische Amin ein Methylenbisanilin ist, insbesondere ein 4,4'-Methylenbis(2,6-dialkyl anilin).

9. Verwendung nach Anspruch 8, **dadurch gekennzeichnet, dass** das aromatische Amin 4,4'-Methylenbis(3-chlor-2,6-diethylanilin) ist.

10. Verwendung nach einem der vorhergehenden Ansprüche, **dadurch gekennzeichnet, dass** der Anteil aromatisches Amin in der Polyolkomponente, bezogen auf die Gesamtmenge Polyol und aromatisches Amin, im Bereich von 0,1 bis 20 Gew.%, bevorzugt 0,3 bis 10 Gew.%, bevorzugter 0,5 bis 5 Gew.% und insbesondere 1 bis 3 Gew.% liegt.

11. Verwendung nach Anspruch 1, **dadurch gekennzeichnet, dass** der Anteil niedrigmolekulares Polyol in der Polyolkomponente, bezogen auf die Gesamtmenge Polyol und aromatisches Amin, im Bereich von 2 bis 70 Gew.-% liegt.

12. Verwendung nach Anspruch 11, **dadurch gekennzeichnet, dass** der Anteil niedrigmolekulares Polyol in der Polyolkomponente, bezogen auf die Gesamtmenge Polyol und aromatisches Amin, im Bereich von 5 bis 60 Gew.-%, bevorzugt 10 bis 50 Gew.-%, bevorzugter 20 bis 45 Gew.-% und insbesondere 35 bis 45 Gew.-% liegt.

13. Verwendung nach Aspruch 1, **dadurch gekennzeichnet, dass** die Hydroxylgruppenkonzentration des niedrigmolekularen Polyols im Bereich von 4,5 bis 15, bevorzugter im Bereich von 5 bis 12 und insbesondere im Bereich von 6 bis 10 mol Hydroxylgruppen je kg niedrigmolekulares Polyol liegt.

14. Verwendung nach Anspruch 1, **dadurch gekennzeichnet, dass** das niedrigmolekulare Polyol ausgewählt ist aus geradkettigen oder verzweigten Polyesterpolyolen, Polyetherpolyolen, wie Polyetherglykolen, Acrylatpolyolen und Polyolen auf Basis dimerer Fettsäuren.

15. Verwendung nach Anspruch 1, **dadurch gekennzeichnet, dass** das höhermolekulare Polyol ausgewählt ist aus Polyesterpolyolen und Polyetherpolyolen, Acrylatpolyolen und Polyolen auf Basis dimerer Fettsäuren.

16. Verwendung nach Anspruch 1, **dadurch gekennzeichnet, dass** der Anteil höhermolekulares Polyol in der Polyolkomponente, bezogen auf die Gesamtmenge Polyol und aromatisches Amin, im Bereich von 75 bis 10 Gew.%, bevorzugt 65 bis 10 Gew.%, bevorzugter 50 bis 12 Gew.% und insbesondere 30 bis 15 Gew.% liegt.

17. Verwendung nach einem der vorhergehenden Ansprüche, **dadurch gekennzeichnet, dass** das aromatische Polyisocyanat monomeres, oligomeres oder polymeres Polyisocyanat ist.

18. Verfahren zur Herstellung von Kunstharz-Verbundwerkstoffen mit Polyurethan-Gelcoats, das
(i) das Mischen einer Zweikomponenten-Zusammensetzung, die
A) eine Polyolkomponente, die ein oder mehrere Polyole und ein oder mehrere aromatische Amine enthält und eine Hydroxylgruppenkonzentration von 0,5 bis 10 mol Hydroxylgruppen je kg Polyolkomponente aufweist, und
B) eine Polyisocyanatkomponente umfasst, die ein oder mehrere aromatische Polyisocyanate enthält,
und mindestens teilweises Härten der Mischung und
(ii) das Inkontaktbringen der Mischung mit Kunstharz umfasst, wobei das Kunstharz Epoxidharz und/oder Vinylesterharz umfasst und beim Inkontaktbringen mit dem Gelcoat nicht oder nicht vollständig ausgehärtet ist,
und wobei die Polyolkomponente
A1) ein oder mehrere niedrigmolekulare Polyole mit einem Molekulargewicht von 150 bis 600 g/mol und einer Hydroxylgruppenkonzentration von 4 bis 20 mol Hydroxylgruppen je kg niedrigmolekulares Polyol und/oder
A2) ein oder mehrere höhermolekulare Polyole und
A3) ein oder mehrere aromatische Amine enthält.

19. Kunstharz-Verbundwerkstoff mit Polyurethan-Gelcoat, herstellbar nach dem Verfahren gemäß Anspruch 18.

20. Verbundwerkstoff nach Anspruch 19, **dadurch gekennzeichnet, dass** er ein Windflügel oder ein Teil davon ist.

## Claims

1. Use of a two-component composition that comprises
A) a polyol component that comprises one or more polyols and one or more aromatic amines and possesses a hydroxyl group concentration of 0.5 to 10 mol hydroxyl groups per kg of polyol component, and
B) a polyisocyanate component that comprises one or more aromatic polyisocyanates,
for manufacturing polyurethane gel coats for synthetic resin composites, wherein the synthetic resin contains epoxy resin and/or vinyl ester resin and is not or not completely cured when brought into contact with the gel coat,
and wherein the polyol component comprises
A1) one or more low molecular weight polyols with a molecular weight of 150 to 6000 g/mol and a hydroxyl group concentration of 4 to 20 mol hydroxyl groups per kg of low molecular weight polyol and/or
A2) one or more higher molecular weight polyols and
A3) one or more aromatic amines.

2. Use according to claim 1, **characterised in that** the elongation at break of the gel coat at 23 °C is at least 3 %, preferably greater than 4 %, especially greater than 5 % (measured according to DIN EN ISO 527).

3. Use according to claim 1 or claim 2, **characterised in that** the polyurethane gel coat is not completely cured when brought into contact with the synthetic resin, wherein the bringing into contact with the synthetic resin is preferably made by depositing the synthetic resin onto the gel coat.

4. Use according to one of the previous claims, **characterised in that** the employed synthetic resin contains one or more reinforcing materials.

5. Use according to claim 4, **characterised in that** the reinforcing material is glass fibre fabric, glass fibre matting, carbon fibre fabric and/or carbon fibre bonded fabric, wherein the added synthetic resin is particularly preferably a prepeg or injection resin, in particular an injection resin or epoxy resin prepeg with glass fibre fabric and/or glass fibre matting.

6. Use according to one of the previous claims, **characterised in that** the polyol component contains one or more polyether polyols.

7. Use according to one of the previous claims, **characterised in that** the aromatic amine, dissolved in toluene (20 wt % amine in toluene), when mixed with an equimolar quantity of an oligomeric HDI isocyanate with an NCO content of about 5.2 mol/kg and a viscosity in the range of 2750 to 4250 mPas, mixed in toluene (80 wt % isocyanate in toluene), affords a gel time of more than 30 seconds, preferably more than 3 minutes, more preferably more than 5 minutes, in particular more than 20 minutes (measured according to E-DIN VDE 0291-2, 1997-06, point 9.2.1).

8. Use according to one of the previous claims, **characterised in that** the aromatic amine is a methylenebisaniline, in particular a 4,4'-methylenebis(2,6-dialkylaniline).

9. Use according to claim 8, **characterised in that** the aromatic amine is 4,4'-methylenebis(3-chloro-2,6-diethylaniline).

10. Use according to one of the previous claims, **characterised in that** the content of aromatic amine in the polyol component, based on the total amount of the polyol and aromatic amine, lies in the range from 0.1 to 20 wt %, preferably 0.3 to 10 wt %, more preferably 0.5 to 5 wt %, and in particular 1 to 3 wt %.

11. Use according to claim 1, **characterised in that** the content of low molecular weight polyol in the polyol component, based on the total amount of polyol and aromatic amine, lies in the range from 2 to 70 wt %.

12. Use according to claim 11, **characterised in that** the content of low molecular weight polyol in the polyol component, based on the total amount of the polyol and aromatic amine, lies in the range from 5 to 60 wt %, preferably 10 to 50 wt %, more preferably 20 to 45 wt. %, and in particular 35 to 45 wt %.

13. Use according to claim 1, **characterised in that** the hydroxyl group concentration of the low molecular weight polyols lies in the range of 5 to 12 and in particular in the range of 6 to 10 mol hydroxyl groups per kg of low molecular weight polyol.

14. Use according to claim 1, **characterised in that** the low molecular weight polyol is selected from straight chain or branched polyester polyols, polyether polyols, such as polyether glycols, acrylate polyols and polyols based on dimeric fatty acids.

15. Use according to claim 1, **characterised in that** the higher molecular weight polyol is selected from polyester polyols and polyether polyols, acrylate polyols and polyols based on dimeric fatty acids.

16. Use according to claim 1, **characterised in that** the content of higher molecular weight polyol in the polyol component, based on the total amount of the polyol and aromatic amine, lies in the range 75 to 10 wt %, preferably 65 to 10 wt %, more preferably 50 to 12 wt. %, and in particular 30 to 15 wt %.

17. Use according to one of the previous claims, **characterised in that** the aromatic polyisocyanate is monomeric, oligomeric or polymeric polyisocyanate.

18. A process for manufacturing synthetic resin composites with gel coats, said process including
(i) mixing a two-component composition that comprises
A) a polyol component that comprises one or more polyols and one or more aromatic amines and possesses a hydroxyl group concentration of 0.5 to 10 mol hydroxyl groups per kg of polyol component, and
B) a polyisocyanate component that comprises one or more aromatic polyisocyanates,
and at least partial curing of the mixture and
(ii) bringing the mixture into contact with synthetic resin, wherein the synthetic resin contains epoxy resin and/or vinyl ester resin and is not or not completely cured when brought into contact with the gel coat
and wherein the polyol component comprises
A1) one or more low molecular weight polyols with a molecular weight of 150 to 6000 g/mol and a hydroxyl group concentration of 4 to 20 mol hydroxyl groups per kg of low molecular weight polyol and/or
A2) one or more higher molecular weight polyols and
A3) one or more aromatic amines.

19. A synthetic resin composite with polyurethane gel coat, manufacturable according to the process of claim 18.

20. The composite according to claim 19, **characterised in that** it is a wind turbine blade or a part thereof.

## Revendications

1. Utilisation d'une composition à deux composants, qui
A) comprend un composant de polyol, qui contient un ou plusieurs polyols et une ou plusieurs amines aromatiques et qui présente une concentration des groupes hydroxyle de 0,5 à 10 mol de groupes hydroxyle par kg de composant polyol, et
B) comprend un composant de polyisocyanate qui contient un ou plusieurs polycyanates aromatiques,
pour la fabrication de gelcoats de polyuréthane pour des matériaux composites de résine synthétique, où la résine synthétique comprend de la résine époxy et/ou de la résine vinyle ester et, lors de la mise en contact avec le gelcoat, n'est pas durcie ou n'est pas durcie complètement,
et où le composant de polyol
A1) contient un ou plusieurs polyols de faible masse moléculaire avec un poids moléculaire de 150 à 600 g/mol et une concentration de groupes hydroxyle de 4 à 20 mol de groupes hydroxyle par kg de polyol de faible masse moléculaire et/ou
A2) un ou plusieurs polyols de masse moléculaire plus élevée et
A3) une ou plusieurs amines aromatiques.

2. Utilisation selon la revendication 1, **caractérisée en ce que** le gelcoat, à 23°C, présente un allongement à la rupture (mesuré selon DIN EN ISO 527) d'au moins 3%, de préférence supérieur à 4%, en particulier supérieur à 5%.

3. Utilisation selon la revendication 1 ou la revendication 2, **caractérisée en ce que** le gelcoat de polyuréthane, lors de la mise en contact avec la résine synthétique, n'est pas complètement durci, où la mise en contact avec la résine synthétique est de préférence une application de la résine synthétique au gelcoat.

4. Utilisation selon l'une des revendications précédentes, **caractérisée en ce que** la résine synthétique utilisée comprend un ou plusieurs matériaux de renforcement.

5. Utilisation selon la revendication 4, **caractérisée en ce que** le matériau de renforcement est un tissu de fibres de verre, une nappe de fibres de verre, un tissu de fibres de carbone et/ou un non-tissé de fibres de carbone, où la résine synthétique utilisée est selon une préférence particulière un pré-imprégné ou une résine d'injection, en particulier une résine d'injection ou un pré-imprégné de résine époxy avec un tissu de fibres de verre et/ou une nappe de fibres de verre.

6. Utilisation selon l'une des revendications précédentes, **caractérisée en ce que** le composant de polyol comprend un ou plusieurs polyétherpolyols.

7. Utilisation selon l'une des revendications précédentes, **caractérisée en ce que** l'amine aromatique, dissoute dans du toluol (20% en poids d'amine dans du toluol), à 23°C, mélangée avec une quantité équimolaire d'un HDI-Isocyanate oligomère avec une teneur en NCO d'environ 5,2 mol/kg et une viscosité dans la plage de 2750 à 4250 mPas, dissoute dans du toluol (80% en poids d'isocyanate dans du toluol), entraîne un temps de gel supérieur à 30 secondes, de préférence supérieur à 3 minutes, selon une plus grande préférence supérieur à 5 minutes, en particulier supérieur à 20 minutes (déterminé selon E-DIN VDE 0291-2, 1997-06, Point 9.2.1).

8. Utilisation selon l'une des revendications précédentes, **caractérisée en ce que** l'amine aromatique est une méthylènebisaniline, en particulier une 4,4'-méthylènebis(2,6-dialkyl aniline).

9. Utilisation selon la revendication 8, **caractérisée en ce que** l'amine aromatique est le 4,4'-méthylènebis(3-chlor-2,6-diéthylaniline.

10. Utilisation selon l'une des revendications précédentes, **caractérisée en ce que** la part en amine aromatique dans le composant de polyol, relativement à la quantité totale de polyol et d'amine aromatique, se situe dans la plage de 0,1 à 20% en poids, de préférence de 0,3 à 10% en poids, selon une plus grande préférence de 0,5 à 5% en poids et en particulier de 1 à 3% en poids.

11. Utilisation selon la revendication 1, **caractérisée en ce que** la part en polyol de faible masse moléculaire dans la composante de polyol, par rapport à la quantité totale de polyol et d'amine aromatique, se situe dans la plage de 2 à 70% en poids.

12. Utilisation selon la revendication 11, **caractérisée en ce que** la part en polyol de faible masse moléculaire dans le composant de polyol, par rapport à la quantité totale de polyol et d'amine aromatique, se situe dans la plage de 5 à 60% en poids, de préférence de 10 à 50% en poids, selon une plus grande préférence de 20 à 45% en poids et en particulier de 35 à 45% en poids.

13. Utilisation selon la revendication 1, **caractérisée en ce que** la concentration des groupes hydroxyle du polyol de faible masse moléculaire se situe dans la plage de 4,5 à 15, selon une plus grande préférence dans la plage de 5 à 12 et en particulier dans la plage de 6 à 10 mol de groupes hydroxyle par kg de polyol de faible masse moléculaire.

14. Utilisation selon la revendication 1, **caractérisée en ce que** le polyol de faible masse moléculaire est sélectionné parmi des polyesters polyols à chaîne droite ou ramifiée, polyéthers polyols, comme polyéthers glycols, acrylate polyols et des polyols à base d'acides gras dimères.

15. Utilisation selon la revendication 1, **caractérisée en ce que** le polyol d'une masse moléculaire plus élevée est sélectionné parmi des polyesters polyols et polyéthers polyols, acrylate polyols et polyols à base d'acides gras dimères.

16. Utilisation selon la revendication 1, **caractérisée en ce que** la part en polyols de masse moléculaire plus élevée dans le composant de polyols, par rapport à la quantité totale de polyols et d'amines aromatiques, se situe dans la plage de 75 à 10% en poids, de préférence de 65 à 10% en poids, selon une plus grande préférence de 50 à 12% en poids et en particulier de 30 à 15% en poids.

17. Utilisation selon l'une des revendications précédentes, **caractérisée en ce que** le polyisocyanate aromatique est le polyisocyanate monomère, oligomère ou polymère.

18. Procédé de fabrication de matériaux composites en résine synthétique avec des gelcoats de polyuréthane, qui comprend
(i) le mélange d'une composition à deux composants, qui
A) présente un composant de polyol qui contient un ou plusieurs polyols et une ou plusieurs amines aromatiques, et présente une concentration de groupes hydroxyle de 0,5 à 10 mol de groupes hydroxy par kg de composants de polyol, et
B) comprend un composant de polyisocyanate qui contient un ou plusieurs polyisocyanates aromatiques,
et au moins un durcissement partiel du mélange et
(ii) comprend la mise en contact du mélange avec la résine synthétique, où la résine synthétique comprend de la résine époxy et/ou résine vinyl ester et, lors de la mise en contact avec le gelcoat n'est pas durcie ou n'est pas complètement durcie,
et où le composant de polyol
A1) comprend un ou plusieurs polyols de faible masse moléculaire avec un poids moléculaire de 150 à 600 g/mol et une concentration de groupes hydroxyle de 4 à 20 mol de groupes hydroxyle par kg de polyol de faible masse moléculaire et/ou
A2) un ou plusieurs polyols d'une masse moléculaire plus élevée et
A3) une ou plusieurs amines aromatiques.

19. Matériau composite en résine synthétique avec un gelcoat de polyuréthane, pouvant être fabriqué conformément au procédé selon la revendication 18.

20. Matériau composite selon la revendication 19, **caractérisé en ce qu'**il est une roue à ailettes ou une partie de celle-ci.
